# EUROPEAN PATENT APPLICATION

(11) **EP 4 723 080 A1**
(43) Date of publication of application: **08.04.2026**
(21) Application number: 24204843.7
(22) Date of filing: 04.10.2024
(51) Int. Cl.: G08G 1/16, G08G 1/0967, H04W 4/46, H04W 76/14, G08G 1/14

(54) **METHOD FOR ESTABLISHING COMMUNICATION BETWEEN TWO VEHICLES AND CORRESPONDING COMMUNICATION SYSTEM**

(71) Applicant: Valeo Comfort and Driving Assistance, 94000 Créteil (FR)
(72) Inventor: GONELA, Rajesh, 94000 Créteil (FR); BASAVARAJ, Sarvesh, 94000 Créteil (FR); MANIARASU, Vijaynath, 94000 Créteil (FR)
(74) Representative: Delaval, Guillaume Laurent

(57) **Abstract**

It is provided a method for establishing communication between a first vehicle (2) already parked and a second vehicle (4) approaching the first vehicle, the first vehicle being equipped with a first telecommunication device (3) configured to communicate with a first mobile communication device (6), the second vehicle (4) being equipped with a second telecommunication device (5) configured to communicate with a second mobile communication device (7), the method comprising:
- a step of detecting, by the second vehicle, a potential obstruction situation, then
- a step of authorizing, by the second telecommunication device (5), the establishment of a communication between the first mobile communication device (6) and the second mobile communication device through a dedicated telematic mobile application.

It is also provided a communication system (1) suitable to implement said method.

## Description

### TECHNICAL FIELD OF THE INVENTION

The invention relates to the field of telecommunication, and specifically to the field of communication between vehicles or vehicle's owners.

More precisely the invention relates to a method for establishing communication between two vehicles and to a communication system configured to implement said method.

### BACKGROUND INFORMATION AND PRIOR ART

The obstruction of one vehicle by another is a common situation. Particularly in busy parking lots, or in the narrow streets of large cities, a driver may not be able to find a suitable space for his vehicle, and may park in such a way as to obstruct another, already parked, vehicle.

The driver can then leave his telephone number in a prominent place so that the driver of the blocked vehicle can call him at the appropriate moment. However, exposing such personal information to public view raises obvious confidentiality issues.

Other solutions exist, in which the parked vehicle sends out an alert to the second vehicle. However, this requires the parked vehicle to keep a constant watch on its surroundings, thus reducing its battery charge. Furthermore, if the driver of the parked vehicle does not intend to drive his car soon, the alert emitted by its car is then irrelevant.

It therefore exists a need to establish a confidential and relevant communication between the driver of the two vehicles.

### SUMMARY OF THE INVENTION

The invention provides a solution to the above-mentioned problems.

According to an aspect of the invention, it is provided a method for establishing communication between a first vehicle already parked and a second vehicle approaching the first vehicle, for instance in a process of being parked, the first vehicle being equipped with a first telecommunication device configured to communicate with a first mobile communication device, the second vehicle being equipped with a second telecommunication device configured to communicate with a second mobile communication device, the method comprising:
- a step of detecting, by the second vehicle, a potential obstruction situation, for instance in which the distance between the first vehicle and the second vehicle is below a predetermined value, then
- a step of authorizing, by the second telecommunication device, the establishment of a communication between the first mobile communication device and the second mobile communication device through a dedicated telematic mobile application.

Thanks to the invention, the first vehicle, already parked, does not have to provide a constant monitoring of its environment in order to detect a potential obstruction situation. It advantageously permits to save battery power. Furthermore, the communication between the two mobile communication devices avoids a public sharing of personal information such as the phone numbers.

According to an embodiment, the step of detecting comprises displaying, on a display unit of the second vehicle, a message relating to the potential obstruction situation and a confirmation, by an occupant of the second vehicle through the display unit, of the occurrence of the obstruction situation, said confirmation triggering the step of authorizing.

According to an embodiment, the method further comprises a step of sending, by the second telecommunication device, an obstruction alert to the first telecommunication device.

According to an embodiment, the method further comprises, after the reception of the obstruction alert, a step of sending, by the first telecommunication device, an obstruction notification to the first mobile communication device.

According to an embodiment, the method comprises a step of detecting the obstruction situation by the first vehicle, the step of sending of an obstruction notification being performed only if the first vehicle detects that the distance is below the predetermined value.

According to an embodiment, the method comprises a step of detecting, by the second vehicle, an end of the obstruction situation, for instance where the distance between the first vehicle and the second vehicle returns above the predetermined value, said step of detecting the end of the obstruction triggering a step of cancelling the authorization of the establishment of said communication.

According to an embodiment, the method comprises at the detection of the end of the obstruction situation, a step of sending, by the second telematic control unit, an end-of-obstruction alert to the first telecommunication mobile.

According to an embodiment, the method comprises a step of establishing, by the first mobile communication device, the authorized communication protocol with the second mobile communication device.

According to an embodiment, in the authorized communication between the first mobile communication device and the second mobile communication device, the first mobile communication device and the second mobile communication device communicate respectively with the first telecommunication device only and the second telecommunication device only, each telecommunication device transmitting the information from the respective mobile communication devices to the other telecommunication device.

According to an embodiment, the method comprises, after an ending of the obstruction situation, a step of sending, by the second telecommunication device, a blocking removed notification to the first telecommunication device.

According to another aspect of the invention, it is provided a communication system comprising a first vehicle equipped with a first telecommunication device configured to communicate with a first mobile communication device, a second vehicle equipped with a second telecommunication device configured to communicate with a second mobile communication device, said system being configured to implement the method according to the invention.

### DETAILED DESCRIPTION OF EXAMPLE(S)

The following description with reference to the accompanying drawings will make it clear what the invention consists of and how it can be achieved. The invention is not limited to the embodiment illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows a communication system according to the invention,
- Figure 2 shows a diagram illustrating a method according to an embodiment of the invention.

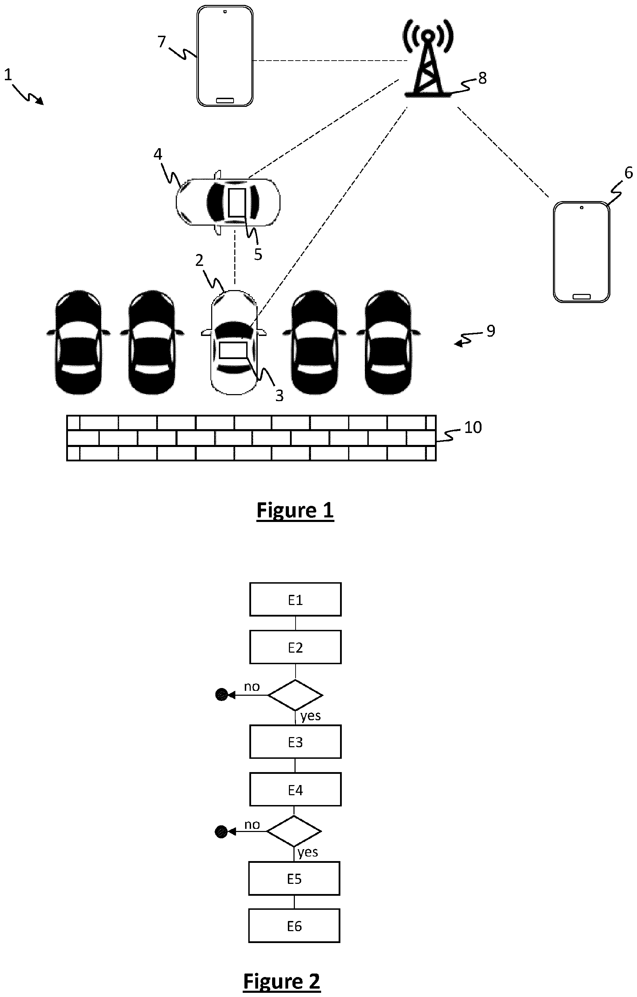

A communication system according to an embodiment of the invention, as shown schematically in Figure 1 and designated as a whole by reference 1, comprises a first vehicle 2 equipped with a first telecommunication device 3, a second vehicle 4 equipped with a second telecommunication device 5, a first mobile communication device 6, a second mobile communication device 7 and a telecommunication network 8.

Here, the first vehicle 2 and the second vehicle 4 are automotive vehicles, and specifically in this example, cars. They are thermic, electric or hybrid vehicles and comprises at least one electrical power battery configured to power an internal electronic network of the vehicle. Said internal electronic network comprises the telecommunication device 3, 5, sensors, for instance proximity sensors (camera, radar, ultrasonic sensors, lidar sensors...), a display unit, and an electronic control unit. The electronic control unit comprises for instance a processor, a memory and input/output ports to communicate with the elements of the internal networks and may control one or several functions of the vehicle. The internal electronic network may comprise several electronic control units, only one of which being mentioned here for simplification purpose.

Here, the telecommunication device of each vehicle 2, 4 comprises several modules and circuitry configured to establish communication channel, such as V2V communication channel (Vehicle-to-Vehicle, for direct communication with other vehicle), V2X communication (Vehicle-to-Everything, for direct communication with road infrastructure and other vehicles), NFC communication channel (Near Field Communication), and radiofrequency communication. For instance, each telecommunication device 3, 5 is equipped with a Subscriber Identity Module (SIM) comprising personal information about the owner of the vehicle and allowing access to telecommunication networks, for instance a cellular network such as the GSM network (Global System for Mobile communication), and/or the internet network. For instance, each of the telecommunication device 3, 5 is a Telematic Control Unit (TCU).

The first vehicle 2 is owned by a first owner and driven by a first driver. The second vehicle 4 is owned by a second owner and driven by a second driver. For simplification purpose, it is considered here that for each of the vehicles 2, 4, the driver is the owner.

Here, the mobile communication devices 6, 7 are configured to run a telematic mobile application (or telematic software). A telematic software allows the owner of the car to access information provided by the internal network of the vehicle (for instance door locks, fuel level, mileage, location...) Specifically, the mobile communication devices 6, 7 obtains these data by communicating with the telecommunication device 3, 5.

For instance, the mobile communication devices 6, 7 are smartphones.

Here, the telecommunication network 8 is a cellular network, for instance GSM, 3G, 4G or 5G network.

Here, the telematics mobile application does not allow to establish communication between the first mobile communication device 6 and the second mobile communication device 7 directly through the telecommunication networks 8, since it would imply to share personal information between the two mobile telecommunication devices 6, 7 (for instance, the phone numbers).

However, the communication system 1 is configured so that a communication channel may be established between the two mobile communication devices 6, 7 through the telecommunication network 8 and through the telecommunication devices 3, 5 using the telematic mobile application.

By default, the first telecommunication device 3 is authorized to establish a communication channel with the first mobile communication device 6 (via the telecommunication network 8), the second telecommunication device 5 is authorized to establish a communication channel with the second mobile communication device 7 (via the telecommunication network), the first telecommunication device 3 and the second telecommunication device 5 are authorized to establish a direct communication channel between each other (for instance, a V2V communication). Since none of the of the mobile communication devices 6, 7 possesses the contact information of the other mobile communication device 6,7, no classical cellular communication is possible between them.

In the illustrated configuration of the communication system 1, the first vehicle 2 is parked on a dedicated parking space. Obstacles block the first vehicle 2 on its right and left (e.g. other cars 9) and behind it (e.g. a wall 10). The first vehicle 2 is stationary, engine off and empty of any occupants. For instance, the electronic control unit of the first vehicle may be in a low-consumption standby mode, where all the electronic module of the first vehicles are off, except for a monitoring module configured to listen for any event (received signal, for instance the unlock signal from the key of the vehicle, a signal from another vehicle or from the telematic mobile application...) and if necessary, to wake up the electronic control unit. The monitoring module may cooperate with the sensors of the vehicle and/or with the telecommunication device.

The second vehicle 4 is approaching the first vehicle 2. Here, it is in a process of being parked. Its engine is running and it is occupied at least by the second driver who, in this situation, intends to park the second vehicle 4 in front of the first vehicle 2. In doing so, he would block the way for the first vehicle 2. Such situation may cause problems if the first driver wishes to leave the parking space before the second vehicle leaves.

The communication system 1 according to the invention, for instance as described above, is particularly adapted for solving this situation, by establishing confidential and secure communication between the two drivers.

In a first step E1 of the method, the second vehicle 4 detects an obstruction situation. For instance, the obstruction situation occurs when a distance between the first vehicle 2 and the second vehicle 4 falls below a predetermined value, for instance two meters. The obstruction situation may be detected thanks to one or several of the proximity sensors of the second vehicle 4.

Then, in a second step E2, the electronic control unit alerts the second driver of the obstruction situation. For instance, the electronic control unit display a text message on the display unit of the second vehicle 4. The control unit also offers to the second driver the opportunity to authorize the driver of the first vehicle to contact him through the telematic mobile application. This text message is for instance: *"You are blocking a car. Do you want to offer the possibility of the owner of the car to contact you?'*

If the second driver do not wishes to be contacted by the first driver, for instance if he judges that the second vehicle 4 does not obstruct the way for the first vehicle 2, or if he intends to stay parked in front of the first car for a very short time, then he answers negatively to the text message, for instance by pressing a "No" button on the display unit. The process then ends. The process also ends if, before the second driver provide an answer to the text message, the obstruction situation ends (for instance here, if the distance between the first vehicle 2 and the second vehicle rises above the predetermined value).

If the second driver wishes to be contacted by the first driver, he answers positively to the text message, for instance by pressing a "Yes" button on the display unit.

Then (step E3), the second telecommunication device 5 sends an obstruction alert to the first telecommunication device 3. The obstruction alert is detected by the monitoring module of the first vehicle 2, which wake up the electronic control unit from its standby mode. Then, the first vehicle 2 proceeds to check the occurrence of the obstruction situation (step E4), for instance by measuring the distance between the first vehicle 2 and the second vehicle 4 with its own proximity sensors.

If the first vehicle 2 does not detect the obstruction situation, then the process ends. If the first vehicle detects the obstruction situation, then (step E5) the first telecommunication device 3 sends an obstruction notification to the first mobile communication device 6, through the telecommunication network 8. Here, the obstruction notification is provided to the first owner through the telematic mobile application, with an opportunity to contact the second owner.

Then, (step E6), the communication between the first mobile communication device 6 and the second mobile communication device 7 may be established. For instance, the communication is a text message communication, a vocal communication or a visio-conference communication. The communication between the two mobile communication devices 6, 7 is established so that all the data and information sent by a mobile communication device to the other pass through a communication channel between the telecommunication devices 3, 5 (for instance, a V2V communication channel), the latter acting therefore as intermediaries. Furthermore, in the present case, the communication is an end-to-end encrypted communication.

For instance, if the first mobile communication device 6 sends a message to the second mobile communication device 7 via the telematic mobile application, the message is first sent to the first telecommunication device 3, for instance through the telecommunication network 8. Then, the first telecommunication device 3 sends the message to the second telecommunication 5 device, for instance through a V2V communication protocol. Finally, the second telecommunication device 5 sends the message to the second mobile communication device 7.

If the second owner wants to answer the message, he sends his response through the second mobile communication device 7 via the telematic mobile application. The response is first sent to the second telecommunication device 5, for instance through the telecommunication network 8. Then, the second telecommunication device 5 sends the response to the first telecommunication 3 device, for instance through a V2V communication protocol. Finally, the first telecommunication device 3 sends the response to the first mobile communication device 6.

In other words, in this example, the communication between the two mobile communication devices 6, 7 may be viewed as a communication between the telecommunication devices 3, 5 remotely controlled by the mobile telecommunication devices 6, 7.

It is not excluded that, during said communication, the two owners agreed to further communicate directly through the mobile network. For instance, during the communication established at step E6, one of the exchanged messages contain a web link, also known as URL (Uniform Ressource Locator). For instance, the web link is a web link to a Voice-over-IP (VoIP) service provided by the telematic mobile application. For instance, either the web link is sent by the first owner via the first mobile communication device (and via the telecommunication devices), or the first telecommunication device 3 directly transmits the web link to the first mobile communication device 6. By following the web link, the two owners can establish a communication directly through the telecommunication network, for instance here a Voice-over-IP communication, with the second mobile communication device 7.

In this example, at any time after the sending of the obstruction alert by the second telecommunication 5 device to the first telecommunication device 3, if the obstruction situation ends, for instance here if the distance between the first vehicle 2 and the second vehicle 4 rises above the predetermined distance, the second telecommunication device 5 sends an end-of obstruction alert to the first telecommunication device 3, which then transmits an end-of-obstruction notification to the first mobile communication device 6.

The invention is not limited the embodiment described above in connection with figures 1 and 2.

For instance, although the vehicles described above are cars, the invention is compatible with any vehicles, for instance trucks, motorcycles, buses, etc. Furthermore, the invention is compatible between vehicles of different kind, for instance a car and a truck, or a bus and a motorcycle.

Also, the mobile communication devices according to the invention are not limited to smartphones, and may be for instance a laptop computer, a tablet computer, a smartwatch, etc. The two mobile communication devices involved in the method according to the invention may be of different type, for instance a smartphone and a laptop computer.

It has been described above an obstruction situation corresponding to a distance between the two vehicles below a threshold predetermined value. The invention is not limited to this definition and is compatible with every definition implying a possibility (a risk) for a vehicle to block the way for the other. For instance, the definition of the obstruction situation may imply several minimal distances, information about the vehicles (for instance the dimensions, transmitted via V2V communications), and/or be defined through the processing of images from cameras of the vehicles.

## Claims

1. Method for establishing communication between a first vehicle (2) already parked and a second vehicle (4) approaching the first vehicle (2), the first vehicle (2) being equipped with a first telecommunication device (3) configured to communicate with a first mobile communication device (6), the second vehicle (4) being equipped with a second telecommunication device (5) configured to communicate with a second mobile communication device (7), the method comprising:
- a step of detecting, by the second vehicle (4), a potential obstruction situation, then
- a step of authorizing, by the second telecommunication device (5), the establishment of a communication between the first mobile communication device (6) and the second mobile communication device (7) through a dedicated telematic mobile application.

2. Method according to claim 1, wherein the step of detecting comprises displaying, on a display unit of the second vehicle (4), a message relating to the potential obstruction situation and a confirmation, by an occupant of the second vehicle (4) through the display unit, of the occurrence of the obstruction situation, said confirmation triggering the step of authorizing.

3. Method according to claim 1 or 2, further comprising a step of sending, by the second telecommunication device (5), an obstruction alert to the first telecommunication device (3).

4. Method according to claim 3, further comprising, after the reception of the obstruction alert, a step of sending, by the first telecommunication device (3), an obstruction notification to the first mobile communication device (6).

5. Method according to claim 4, comprising a step of detecting the obstruction situation by the first vehicle (2), the step of sending of an obstruction notification being performed only if the first vehicle (2) detects that the distance is below the predetermined value.

6. Method according to any one of claims 1 to 5, comprising a step of detecting, by the second vehicle (4), an end of the obstruction situation, said step of detecting the end of the obstruction situation triggering a step of cancelling the authorization of the establishment of said communication.

7. Method according to any one of claim 1 to 6, further comprising a step of establishing, by the first mobile communication device (6), the authorized communication protocol with the second mobile communication device (7).

8. Method according to any one of claims 1 to 7, wherein in the authorized communication between the first mobile communication device (6) and the second mobile communication device (7), the first mobile communication device (6) and the second mobile communication device (7) communicate respectively with the first telecommunication device (3) only and the second telecommunication device (5) only, and each telecommunication device (3, 5) transmitting the information from the respective mobile communication device (6, 7) to the other telecommunication device (3, 5)..

9. Method according to any one of claims 1 to 8, comprising, after an ending of the obstruction situation, a step of sending, by the second telecommunication device (5), a blocking removed notification to the first telecommunication device.

10. Method according to any one of claims 1 to 9, wherein the obstruction situation is a situation in which the distance between the first vehicle and the second vehicle is below a predetermined value.

11. Communication system comprising a first vehicle (2) equipped with a first telecommunication device (3) configured to communicate with a first mobile communication device (6), a second vehicle (4) equipped with a second telecommunication device (5) configured to communicate with a second mobile communication device (7), said system (1) being configured to implement the method according to any one of claims 1 to 10.
